# EUROPEAN PATENT APPLICATION

(11) **EP 4 442 389 A1**
(43) Date of publication of application: **09.10.2024**
(21) Application number: 22901352.9
(22) Date of filing: 30.11.2022
(51) Int. Cl.: B22F 1/16, B22F 1/00, B22F 1/105, B22F 10/28, B33Y 70/00, B33Y 80/00, B82Y 30/00, C22C 19/05, C22C 38/00, C22C 38/48

(54) **3D PRINTING ALLOY POWDER MATERIAL COMPRISING OXIDE NANOPARTICLES, AND 3D PRINTED BODY**

(30) Priority: 01.12.2021 JP 2021195748
(71) Applicant: Sanyo Special Steel Co., Ltd., Himeji-shi, Hyogo 672-8677 (JP)
(72) Inventor: HAGIYA, Toru, Himeji-shi, Hyogo 672-8677 (JP); IKEDA, Hiroki, Himeji-shi, Hyogo 672-8677 (JP); AIKAWA, Yoshikazu, Himeji-shi, Hyogo 672-8677 (JP); MORIGUCHI, Hiroki, Himeji-shi, Hyogo 672-8677 (JP)
(74) Representative: Müller-Boré & Partner Patentanwälte PartG mbB
(86) International application number: PCT/JP2022/044113
(87) International publication number: WO 2023/100920

(57) **Abstract**

An object of the present invention is to provide a powder for additive manufacturing excellent in high-temperature strength, and an additively manufactured article excellent in high-temperature strength produced using the powder for additive manufacturing, and the present invention provides an alloy powder material for additive manufacturing, including: an alloy powder; and oxide nanoparticles that have not been subjected to surface treatment with an organic substance, wherein the oxide nanoparticles are attached to surfaces of alloy particles constituting the alloy powder, and an additively manufactured article produced using the alloy powder material for additive manufacturing.

## Description

### FIELD OF THE INVENTION

The present invention relates to an alloy powder material for additive manufacturing, including nanometer-sized particles consisting of an oxide (hereinafter referred to as "oxide nanoparticles"), and an additively manufactured article obtained by additive manufacturing using the alloy powder material.

### BACKGROUND ART

A method for manufacturing a shaped article having a three-dimensional shape by irradiating a powder material with a laser beam or an electron beam (hereinafter referred to as a selective laser melting method) is known. A method for producing a metal powder for use in metal stereolithography in which a shaped article having a three-dimensional shape is obtained by irradiating a powder layer consisting of a metal powder with a light beam to form a sintered layer and laminating the sintered layers is proposed. Typical metal additive manufacturing methods include a powder bed method (powder bed fusion method) and a metal deposition method (directed energy deposition method).

In the metal deposition method, shaped layers are stacked by repeating the step of supplying a melted powder to a predetermined position and solidifying it to form a shaped layer. A melted powder can be formed by directly melting the powder by melting the flying powder that is injected toward the base material or the powder that adheres to the surface of the base material with a laser beam, or by indirectly melting the powder by injecting the powder onto the melted base material surface.

In the powder bed method, irradiation with a laser beam or an electron beam melts and solidifies the irradiated portion of the spread powder. The melting and solidification cause the powder particles to bond together. The irradiation is selectively applied to a portion of the metal powder, and the portion that is not irradiated is not melted, and a bonding layer is formed only in the irradiated portion.

A new metal powder is further spread over the formed bonding layer, and the metal powder is irradiated with a laser beam or an electron beam. The irradiation then melts and solidifies the metal particles, forming a new bonding layer. The new bonding layer is also bonded to the existing bonding layer.

An aggregate of bonding layers gradually grows by sequentially repeating melting and solidification by irradiation. Through this growth, a shaped article having a three-dimensional shape is obtained. When such an additive manufacturing method is used, a shaped article having a complicated shape can be easily obtained.

The method suggested as the powder bed additive manufacturing method is, for example, a method for producing a shaped article having a three-dimensional shape comprising forming a sintered layer by repeating a powder layer forming step of forming a powder layer using a powder that is a mixture of an iron-based powder and one or more types of powder selected from the group consisting of nickel, a nickel-based alloy, copper, a copper-based alloy, and graphite as a metal powder for metal stereolithography, a sintered layer forming step of irradiating the powder layer with a beam to form a sintered layer, and a removal step of cutting the surface of the shaped article (see Patent Literature 1).

In metal additive manufacturing, powder fluidity is important in order to spread the powder at a high filling level. The most well-known method for improving such powder fluidity is to increase the powder's circularity.

In addition, in order to improve fluidity, a method is proposed in which oxide nanoparticles that have not been subjected to surface treatment with an organic substance are mixed with Fe-based alloy metal particles so as to reduce the adhesion force between metal powders (see Patent Literature 2). However, since the oxide nanoparticles that have not been subjected to surface treatment with an organic substance are used, the nanoparticles tend to aggregate compared with nanoparticles that have been subjected to surface treatment with an organic substance. Therefore, it requires a procedure of obtaining a powder material that does not contain an aggregation formed by nanoparticles (hereinafter referred to as "nanoparticle aggregation") by further performing a classification step using a jet mill.

Regarding high-temperature strength, a method for forming a material excellent in high-temperature strength by solidifying and molding a mechanically alloyed powder material by mixing a metal raw material and oxide nanoparticles using HIP to disperse a fine oxide in the metal structure is known, although the method does not relates to additive manufacturing (see Non Patent Literature 1). As a mechanically alloyed powder in which an oxide is dispersed, powders such as MA6000 and MA754 for Ni-based alloys and MA956 for Fe-based alloys are commercially available in practice. However, mechanically alloyed powders have low sphericity, and their fluidity and filling properties are not necessarily suitable.

### CITATION LIST

### PATENT LITERATURE

Patent Literature 1: Japanese Unexamined Patent Publication No. 2008-81840
Patent Literature 2: Japanese Unexamined Patent Publication No. 2021-75784

### NON PATENT LITERATURE

Non Patent Literature 1: Yoshinari Kaieda, "Perspective of the Development of Oxide Dispersion Strengthened (ODS) Superalloys," Turbomachinery Vol. 13 (1985), No. 4 issue

### SUMMARY OF THE INVENTION

### TECHNICAL PROBLEM

To produce an additively manufactured article excellent in high-temperature strength by an additive manufacturing method using a metal powder, it is preferable to use a metal powder with a high degree of filling. However, it is difficult to obtain a desired sphericity with ordinary mechanical alloying. In addition, in the case of mechanical alloying, particles are rolled and folded such that they are pressed and crushed repeatedly for alloying, and thus an oxide is not always dispersed on the particle surface.

Therefore, an object of the present invention is to provide a powder for additive manufacturing excellent in high-temperature strength and an additively manufactured article excellent in high-temperature strength obtained by additive manufacturing using the powder for additive manufacturing.

### SOLUTION TO PROBLEM

As a result of intensive studies, the present inventors found that an additively manufactured article excellent in high-temperature strength can be obtained by performing metal additive manufacturing using an alloy powder material for additive manufacturing, which is obtained by allowing oxide nanoparticles that have not been subjected to surface treatment with an organic substance to attach to the surfaces of alloy particles constituting an alloy powder such that an area ratio of an oxide nanoparticle aggregation is 10% or less so as to realize oxide dispersion strengthening (ODS).

Accordingly, the present invention provides the following inventions.
[1] An alloy powder material for additive manufacturing, including:
   an alloy powder; and
   oxide nanoparticles that have not been subjected to surface treatment with an organic substance.
   wherein the oxide nanoparticles are attached to surfaces of alloy particles constituting the alloy powder.
[2] The alloy powder material for additive manufacturing according to [1], wherein the alloy powder is an Ni-based alloy powder.
[3] The alloy powder material for additive manufacturing according to [1], wherein the alloy powder is an Fe-based alloy powder.
[4] The alloy powder material for additive manufacturing according to any one of [1] to [3], wherein an area ratio of an oxide nanoparticle aggregation formed by the oxide nanoparticles is 0.1% or more and 10% or less.
[5] The alloy powder material for additive manufacturing according to any one of [1] to [4], wherein an additive amount of the oxide nanoparticles is 0.1 mass% or more and 1.5 mass% or less, based on a mass of the alloy powder.
[6] The alloy powder material for additive manufacturing according to any one of [1] to [5], wherein a primary particle size of the oxide nanoparticles is 1 nm or more and 100 nm or less.
[7] The alloy powder material for additive manufacturing according to any one of [1] to [6], wherein an oxide constituting the oxide nanoparticles is Y₂O₃, ThO₂, Al₂O₃, TiO₂, or SiO₂.
[8] An additively manufactured metal article obtained by additive manufacturing using the alloy powder material for additive manufacturing according to any one of [1] to [7].

### ADVANTAGEOUS EFFECTS OF INVENTION

When additive manufacturing is performed using the alloy powder material for additive manufacturing according to the present invention, a shaped article excellent in high-temperature strength can be obtained, since an oxide is finely dispersed in the shaped article.

As an additive amount of oxide nanoparticles increases, an oxide nanoparticle aggregation tends to form easily on surfaces of alloy particles constituting an alloy powder. The oxide nanoparticle aggregation diffuses in a melt pool upon laser melting and is dispersed throughout. However, in the case where an area ratio of the oxide nanoparticle aggregation excessively increases, a part of the oxide nanoparticle aggregation is not dispersed and remains as a micrometer-scale oxide nanoparticle aggregation. Such a remaining micrometer-scale oxide nanoparticle aggregation forms when the area ratio of the oxide nanoparticle aggregation exceeds 10%.

In the case where the area ratio of the oxide nanoparticle aggregation on the surfaces of the alloy particles constituting the alloy powder is controlled to 10% or less, the aggregation of the oxide nanoparticle aggregation is dissolved when melting the alloy powder material for additive manufacturing in the additive manufacturing method, causing the oxide nanoparticle aggregation to be dispersed as fine oxide nanoparticles of tens to hundreds of nanometers. Accordingly, an additively manufactured article is strengthened via oxide dispersion strengthening. On the other hand, in the case where the area ratio of the oxide nanoparticle aggregation exceeds 10%, the aggregation of the oxide nanoparticle aggregation is not sufficiently dissolved upon melting, causing a micrometer-scale oxide nanoparticle aggregation to tend to remain easily. Such a micrometer-scale oxide nanoparticle aggregation may become an origin of break, causing the strength of an additively manufactured article to decrease.

The oxide nanoparticles are allowed to attach to the surfaces of the alloy particles constituting the alloy powder such that the oxide nanoparticles are positioned between the alloy particles. As a result, the alloy particles do not come into contact with each other, and thus the adhesion force between the particles is reduced. Accordingly, the fluidity of the alloy powder material can be improved.

### BRIEF DESCRIPTION OF THE DRAWINGS

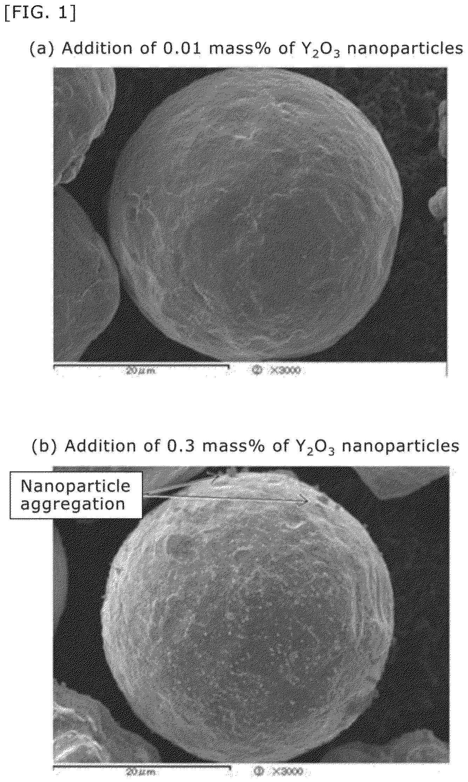

FIG. 1 is a view of images of alloy powder materials including a nickel-based alloy powder and oxide nanoparticles attached to the surfaces of alloy particles constituting the nickel-based alloy powder taken with a scanning electron microscope (SEM). In FIG. 1(a), Y₂O₃ nanoparticles were added at 0.01 mass% based on the mass of the nickel-based alloy powder. In FIG. 1(b), Y₂O₃ nanoparticles were added at 0.3 mass% based on the mass of the nickel-based alloy powder.

### DETAILED DESCRIPTION OF THE INVENTION

Hereinafter, the alloy powder material for additive manufacturing according to the present invention will be described.

The alloy powder material for additive manufacturing according to the present invention contains: an alloy powder; and oxide nanoparticles that have not been subjected to surface treatment with an organic substance, wherein the oxide nanoparticles are attached to surfaces of alloy particles constituting the alloy powder. The oxide nanoparticles are attached to the surfaces of at least part of the alloy particles constituting the alloy powder. The alloy powder material for additive manufacturing according to the present invention may contain alloy particles, to the surfaces of which oxide nanoparticles are not attached. At least part of the oxide nanoparticles contained in the alloy powder material for additive manufacturing according to the present invention are attached to the surfaces of the alloy particles. The alloy powder material for additive manufacturing according to the present invention may contain oxide nanoparticles that are not attached to the alloy particles.

The alloy powder consists of the alloy particles. The alloy powder is a base powder for the alloy powder material for additive manufacturing according to the present invention.

In one preferred embodiment, the alloy powder is an Ni-based alloy powder. The Ni-based alloy powder may contain one or more elements selected from Fe, Cr, C, Mn, Si, Mo, Co, Nb, Al, Ti, Ta, Zr and B. The content of each element is as follows. As used herein, "mass %" is based on the mass of the alloy powder.

The Fe content is preferably 25.0 mass% or less, more preferably 20.0 mass% or less. The lower limit of the Fe content may be 0 mass%, or more than 0 mass%.

The Cr content is preferably 28.0 mass% or less, more preferably 24.0 mass% or less. The lower limit of the Cr content may be 0 mass%, or more than 0 mass%.

The C content is preferably 0.2 mass% or less, more preferably 0.1 mass% or less. The lower limit of the C content may be 0 mass%, or more than 0 mass%.

The Mn content is preferably 0.2 mass% or less, more preferably 0.1 mass% or less. The lower limit of the Mn content may be 0 mass%, or more than 0 mass%.

The Si content is preferably 0.2 mass% or less, more preferably 0.1 mass% or less. The lower limit of the Si content may be 0 mass%, or more than 0 mass%.

The Mo content is preferably 4.0 mass% or less, more preferably 3.5 mass% or less. The lower limit of the Mo content may be 0 mass%, or more than 0 mass%.

The Co content is preferably 25.0 mass% or less, more preferably 21.0 mass% or less. The lower limit of the Co content may be 0 mass%, or more than 0 mass%.

The Nb content is preferably 7.0 mass% or less, more preferably 6.0 mass% or less. The lower limit of the Nb content may be 0 mass%, or more than 0 mass%.

The Al content is preferably 6.0 mass% or less, more preferably 3.0 mass% or less. The lower limit of the Al content may be 0 mass%, or more than 0 mass%.

The Ti content is preferably 6.0 mass% or less, more preferably 4.0 mass% or less. The lower limit of the Ti content may be 0 mass%, or more than 0 mass%.

The Ta content is preferably 4.0 mass% or less, more preferably 3.0 mass% or less. The lower limit of the Ta content may be 0 mass%, or more than 0 mass%.

The Zr content is preferably 1.0 mass% or less, more preferably 0.3 mass% or less. The lower limit of the Zr content may be 0 mass%, or more than 0 mass%.

The B content is preferably 0.01 mass% or less, more preferably 0.005 mass% or less. The lower limit of the B content may be 0 mass%, or more than 0 mass%.

The balance of the Ni-based alloy powder consists of Ni and inevitable impurities.

In another preferred embodiment, the alloy powder is an Fe-based alloy powder. The Fe-based alloy powder may contain one or more elements selected from Ni, Cr, C, Mn, Si, Nb, Cu, Mo, Ti and Al. The content of each element is as follows. As used herein, "mass%" is based on the mass of the alloy powder.

The Ni content is preferably 10.0 mass% or less, more preferably 5.0 mass% or less. The lower limit of the Ni content may be 0 mass%, or more than 0 mass%.

The Cr content is preferably 20.0 mass% or less, more preferably 18.0 mass% or less. The lower limit of the Cr content may be 0 mass%, or more than 0 mass%.

The C content is preferably 0.3 mass% or less, more preferably 0.1 mass% or less. The lower limit of the C content may be 0 mass%, or more than 0 mass%.

The Mn content is preferably 2.0 mass% or less, more preferably 1.0 mass% or less. The lower limit of the Mn content may be 0 mass%, or more than 0 mass%.

The Si content is preferably 2.0 mass% or less, more preferably 1.0 mass% or less. The lower limit of the Si content may be 0 mass%, or more than 0 mass%.

The Nb content is preferably 5.0 mass% or less, more preferably 3.0 mass% or less. The lower limit of the Nb content may be 0 mass%, or more than 0 mass%.

The Cu content is preferably 7.0 mass% or less, more preferably 5.0 mass% or less. The lower limit of the Cu content may be 0 mass%, or more than 0 mass%.

The Mo content is preferably 5.0 mass% or less, more preferably 3.0 mass% or less. The lower limit of the Mo content may be 0 mass%, or more than 0 mass%.

The Ti content is preferably 5.0 mass% or less, more preferably 3.0 mass% or less. The lower limit of the Ti content may be 0 mass%, or more than 0 mass%.

The Al content is preferably 5.0 mass% or less, more preferably 3.0 mass% or less. The lower limit of the Al content may be 0 mass%, or more than 0 mass%.

The balance of the Fe-based alloy powder consists of Fe and inevitable impurities.

D₅₀ of the alloy powder is preferably 2 µm or more and 150 µm or less. When D₅₀ of the alloy powder is less than 2 µm, excessive micronization may reduce the fluidity of the powder. When D₅₀ of the alloy powder exceeds 150 µm, the filling rate of the powder decreases, which may result in a reduced density of a shaped article.

A preferable range of D₅₀ of the alloy powder depends on the type of an additive manufacturing method used. An additively manufactured article can be appropriately obtained by adjusting D₅₀ of the alloy powder depending on the type of an additive manufacturing method used. The preferable range of D₅₀ of the alloy powder in a selective laser melting (SLM) method, a laser depositionor electron beam method, or a binder jet method is as follows.
·Selective laser melting (SLM) method: 10 µm ≤ D₅₀ ≤ 45 µm
·Laser deposition or electron beam method: 45 µm ≤ D₅₀ ≤ 150 µm
·Binder jet method: 2 µm ≤ D₅₀ ≤ 25 µm

D₅₀ (µm) of the alloy powder is the particle size at the point where the cumulative volume is 50% in a volume-based cumulative frequency distribution curve determined with the total volume of the alloy powder as 100%. D₅₀ is measured by a laser diffraction scattering method. It is measured using an apparatus suitable for this measurement, for example, NIKKISO CO., LTD.'s laser diffraction/scattering particle size distribution measuring apparatus, "Microtrac MT3000." The powder is poured into a cell of this apparatus together with pure water, and the particle size is detected based on the light scattering information of the particles.

Examples of the method for producing the alloy powder include a water atomization method, a single-roll quenching method, a twin-roll quenching method, a gas atomization method, a disc atomization method, and a centrifugal atomization method. Of these, the single-roll quenching method, the gas atomization method, and the disc atomization method are preferable as the method for producing the alloy powder. When producing the alloy powder, pulverization using mechanical milling or the like can be performed to obtain a powder. Examples of the milling method include a ball mill method, a bead mill method, a planetary ball mill method, an attritor method, and a vibrating ball mill method. From the viewpoint of spheroidization, the gas atomization method is particularly preferable as the method for producing the alloy powder.

The primary particle size of the oxide nanoparticles is preferably 1 nm or more and 100 nm or less. The smaller the particle size, the greater the effect of oxide dispersion strengthening (ODS) during additive manufacturing. Therefore, the primary particle size of the oxide nanoparticles is more preferably 1 nm or more and 50 nm or less, still more preferably 1 nm or more and 30 nm or less. The primary particle size of the oxide nanoparticles after mixing the alloy powder and the oxide nanoparticles (i.e., after allowing the oxide nanoparticles to attach to the alloy particles constituting the alloy powder) is the same as the primary particle size of the oxide nanoparticles before mixing. The primary particle size of the oxide nanoparticles can be determined based on the "Determination of the specific surface area of powders (solids) by gas adsorption-BET method" (JIS Z 8830:2013).

The average primary particle size of the oxide nanoparticles is preferably 10 nm or more and 100 nm or less. The smaller the average primary particle size, the greater the effect of oxide dispersion strengthening (ODS) during additive manufacturing. Therefore, the average primary particle size of oxide nanoparticles is more preferably 15 nm or more and 70 nm or less, still more preferably 20 nm or more and 40 nm or less. The average primary particle size of the oxide nanoparticles can be determined based on the "Determination of the specific surface area of powders (solids) by gas adsorption-BET method" (JIS Z 8830:2013).

The additive amount of oxide nanoparticles to the alloy powder is, for example, 0.02 mass% or more and 1.75 mass% or less, preferably 0.1 mass% or more and 1.5 mass% or less, based on the mass of the alloy powder. When the additive amount of the oxide nanoparticles is less than 0.1 mass%, the obtained effect of oxide dispersion strengthening (ODS) may not be sufficient. When the additive amount of oxide nanoparticles exceeds 1.5 mass%, the oxide nanoparticle aggregation tends to form easily, which may result in reduced strength of an additively manufactured article. The additive amount of the oxide nanoparticles is more preferably 0.2 mass% or more and 1.5 mass% or less, still more preferably 0.25 mass% or more and 1.0 mass% or less, based on the mass of the alloy powder.

For the purpose of improving fluidity, the additive amount of the oxide nanoparticles is sufficient at 0.01 mass% or more and less than 0.1 mass%, based on the mass of the alloy powder. However, it is preferable to adjust the additive amount of the oxide nanoparticles to 0.1 mass% or more so as to realize oxide dispersion strengthening (ODS). When the additive amount of oxide nanoparticles is increased to 0.1 mass% or more, a 1-µm or more oxide nanoparticle aggregation inevitably forms.

Examples of the method for producing the oxide nanoparticles that have not been subjected to surface treatment with an organic substance include a flame spray pyrolysis (FSP) method and a physical vapor synthesis (PVS) method. Use of oxide nanoparticles having high sphericity is effective for preventing excessive aggregation of the oxide nanoparticles. A preferred powder having high sphericity can be obtained more easily by the PVS than by the FSP method, since oxide nanoparticles obtained by the PVS method have higher sphericity than those obtained by the FSP method.

Examples of an oxide constituting the oxide nanoparticles include Y₂O₃, ThO₂, Al₂O₃, TiO₂, and SiO₂. The oxide nanoparticles are composed of one or more oxides. Any oxide, which is not limited to these exemplified oxides, can be preferably used, as long as oxide nanoparticles composed thereof can stably exist in a matrix even at high temperatures. Among the above, Y₂O₃ and Al₂O₃ are preferable because they can stably exist in a matrix even at high temperatures. Y₂O₃ is more preferable. Y₂O₃ is used for the explanation of typical oxide nanoparticles in the Examples.

The oxide nanoparticles have not been subjected to surface treatment with an organic substance. Examples of the surface treatment with an organic substance include surface treatment with an organic substance such as dimethylsilyl or trimethylsilyl.

The area ratio of the oxide nanoparticle aggregation formed by the oxide nanoparticles attached to the surfaces of the alloy particles is, for example, 13% or less, preferably 10% or less. In the case where the area ratio of the oxide nanoparticle aggregation is 10% or less, the aggregation of the oxide nanoparticle aggregation is dissolved when melting the alloy powder material for additive manufacturing in the additive manufacturing method, causing the oxide nanoparticle aggregation to be dispersed as fine oxide nanoparticles of tens to hundreds of nanometers. Accordingly, an additively manufactured article is strengthened via ODS. On the other hand, in the case where the area ratio of the oxide nanoparticle aggregation exceeds 10%, the aggregation of the oxide nanoparticle aggregation is not sufficiently dissolved upon melting, causing a micrometer-scale oxide nanoparticle aggregation to remain. Such a micrometer-scale oxide nanoparticle aggregation may become an origin of break, causing the strength of an additively manufactured article to decrease. The area ratio of the oxide nanoparticle aggregation is more preferably 7% or less, still more preferably 5% or less. In addition, from the viewpoint of oxide dispersion strengthening (ODS), the area ratio of the oxide nanoparticle aggregation is preferably 0.1% or more, more preferably 0.5% or more, still more preferably 0.9% or more. Each of these lower limits may be combined with any of the upper limits described above. In one preferred embodiment, the area ratio of the oxide nanoparticle aggregation is 0.1% or more and 10% or less.

The area ratio of an oxide nanoparticle aggregation is measured as follows. Thirty alloy particles to which oxide nanoparticles are attached are observed using a scanning electron microscope (SEM). Then, it is determined whether each particle is an alloy particle or an oxide nanoparticle by energy dispersive X-ray spectroscopy (EDS). A part with a particle diameter of more than 1 µm, calculated by conversion from the area, is defined as an oxide nanoparticle aggregation, and the area ratio of the oxide nanoparticle aggregation is determined from the following formula: Area ratio of oxide nanoparticle aggregation = (Total area of oxide nanoparticle aggregation observed in one alloy particle)/(Area of one alloy particle).

For the "area of one alloy particle," only the part visible in the SEM image is measured (i.e., the part that overlapped and cannot be seen is not measured).

For each of the 30 alloy particles to which oxide nanoparticles are attached, the area ratio of an oxide nanoparticle aggregation is determined from the above formula, and the average value thereof is defined as the area ratio of the oxide nanoparticle aggregation in the alloy powder material for additive manufacturing according to the present invention.

The alloy powder material for additive manufacturing according to the present invention can be produced by mixing an alloy powder and oxide nanoparticles. Mixing can be performed using a V-type mixer. Mixing can also be performed using a tumbler mixer, a ball mixer, or other equipment. It is also possible to manually mix in a container.

Even after mixing, oxide nanoparticles that are not attached to the particles constituting the alloy powder may remain. The remaining oxide nanoparticles have a size of several micrometers to several hundred micrometers. It is preferable to remove these non-attaching oxide nanoparticles by sieve classification. A suitable alloy powder material for additive manufacturing can be obtained via this removal step.

Hereinafter, the additively manufactured metal article according to the present invention will be described.

The additively manufactured metal article according to the present invention is an additively manufactured metal article that has been additively manufactured using the alloy powder material for additive manufacturing according to the present invention.

Typical examples of the additive manufacturing method include a selective laser melting (SLM) method, a binder jet method, an electron beam melting (EBM) method, and a laser deposition method. The additive manufacturing method can be performed using, for example, a 3D printer. It is preferable that the material used in the additive manufacturing method consists of the alloy powder material for additive manufacturing according to the present invention; however, it may contain a material(s) other than the alloy powder material for additive manufacturing according to the present invention (e.g., a powder binder such as resin powder).

### EXAM PLES

### [Preparation of Alloy Powder as Base of Test Material]

Alloy powders having the component compositions shown in Table 1-1 were prepared as base powders for the alloy powder materials for additive manufacturing of the Examples and Comparative Examples using a gas atomization method. In the gas atomization method, raw materials compounded in predetermined proportions were melted in an alumina crucible in a vacuum using high-frequency induction heating; the melted alloy was dropped from a nozzle having a diameter of about 5 mm under the crucible, and then high-pressure argon or high-pressure nitrogen was gas-sprayed to the alloy.

Specifically, alloy powders having the following component compositions were prepared as an Ni-based alloy powder corresponding to Inconel 718:
(No. A) Fe-52% Ni-20% Cr-0.05% C-0.1% Mn-0.2% Si-3.0% Mo-0.3% Co-5.2% Nb-0.5% Al-0.9% Ti-0.003% B; and
(No. B) Fe-52% Ni-20% Cr-0.05% C-0.1% Mn-0.2% Si-3.0% Mo-0.3% Co-5.2% Nb-0.5% Al-0.9% Ti-0.003% B.

In addition, an alloy powder having the following component composition was prepared as an Fe-based alloy powder corresponding to SUS630:
(No. C) Fe-16% Cr-4% Ni-4% Cu-0.9% Mn-0.4% Nb-0.25% Si-0.05% C.

Note that "%" means mass%.

The average particle diameter D₅₀ (µm) and sphericity of each alloy powder obtained are shown in Table 1-2. The average particle size D₅₀ (µm) is the particle size at the point where the cumulative volume is 50% in a volume-based cumulative frequency distribution curve determined with the total volume of the alloy powder as 100%. The method for measuring D₅₀ is described below. The sphericity Ro is defined by the formula: Ro = 4nS/L2. In this formula, S is the projected area of the particle or its cross-section, and L is the contour length of this projected image. For example, an image analysis device (Morphologi G3) is used to measure the projected area S and the contour length L.

### [Method for Measuring D₅₀]

In measuring the average particle size D₅₀, a cumulative curve is determined with the total alloy powder volume taken as 100%. The particle size at the point on this curve where the cumulative volume is 50% is D₅₀. The particle diameter D₅₀ is determined by laser diffraction scattering. An example of an apparatus suitable for this measurement is NIKKISO CO., LTD.'s laser diffraction/scattering particle size distribution measuring apparatus, "Microtrac MT3000." The powder is poured into a cell of this apparatus together with pure water, and the particle size is detected based on the light scattering information of the particles.

### [Table 1-1]

**Table 1-1**

| | Alloy composition (mass%) | | | | | | | | | | | | |
|---|---|---|---|---|---|---|---|---|---|---|---|---|---|
| | Ni | Cr | C | Mn | Si | Mo | Co | Nb | Al | Ti | B | Cu | Fe |
| Ni-based alloy powder A | 52 | 20 | 0.05 | 0.1 | 0.2 | 3.0 | 0.3 | 5.2 | 0.5 | 0.9 | 0.003 | - | Balance |
| Ni-based alloy powder B | 52 | 20 | 0.05 | 0.1 | 0.2 | 3.0 | 0.3 | 5.2 | 0.5 | 0.9 | 0.003 | - | Balance |
| Fe-based alloy powder C | 4 | 16 | 0.05 | 0.9 | 0.25 | - | - | 0.4 | - | - | - | 4 | Balance |

| | | | | | | | | | | | | | |
|---|---|---|---|---|---|---|---|---|---|---|---|---|---|
| The Ni-based alloy powders each correspond to Inconel 718, and the Fe-based alloy powder corresponds to SUS630. | | | | | | | | | | | | | |

### [Table 1-2]

**Table 1-2**

| | D₅₀ (µm) | Sphericity |
|---|---|---|
| Ni-based alloy powder A | 31.2 | 0.91 |
| Ni-based alloy powder B | 8.3 | 0.89 |
| Fe-based alloy powder C | 30.9 | 0.81 |

### [Mixing of Alloy Powder and Oxide Nanoparticle]

Y₂O₃ nanoparticles (average primary particle size: 29 nm) manufactured by CIK NanoTek Corporation were used as oxide nanoparticles. To allow the oxide nanoparticles to attach to the surfaces of alloy particles constituting the alloy powder, the alloy powder and the oxide nanoparticles were mechanically mixed using a V-type mixer. Mixing can also be performed using a tumbler mixer, a ball mixer, or other equipment so as to allow oxide nanoparticles to attach to the surfaces of alloy particles constituting the alloy powder. It is also possible to manually mix in a container.

### [Removal of Non-Attaching Oxide Nanoparticles]

Even after the mixing operation, oxide nanoparticles that are not attached to the alloy particles constituting the alloy powder may remain. The remaining oxide nanoparticles have a size of several micrometers to several hundred micrometers. Therefore, non-attaching oxide nanoparticles were removed by sieve classification. A suitable alloy powder material for additive manufacturing can be obtained via this removal step.

### [Preparation of Tensile Test Piece and Rapture Test Piece by Metal Additive Manufacturing]

A tensile test piece and a rapture test piece were prepared by the following two methods using an alloy powder material for additive manufacturing, the alloy powder including an alloy powder and oxide nanoparticles attached to the surfaces of alloy particles constituting the alloy powder obtained via the above-described treatment:
(i) a test piece was prepared by performing metal additive manufacturing by a selective laser melting (SLM) method using an alloy powder material for additive manufacturing, the base powder of which is Ni-based alloy powder A (D₅₀: 31.2 µm) or Fe-based alloy powder C (D₅₀: 30.9 µm) in Table 1-1; and
(ii) a test piece was prepared by performing metal additive manufacturing by a binder jet method using an alloy powder material for additive manufacturing, the base powder of which is Ni-based alloy powder B (D₅₀: 8.3 µm) in Table 1-1.

Needless to say, the additive manufacturing method using the alloy powder material for additive manufacturing according to the present invention is not limited to these methods. Therefore, additive manufacturing can be performed by an electron beam melting (EBM) or laser deposition method. However, test pieces prepared using the above two methods are used herein for evaluation.

### [Heat Treatment of Shaped Article]

The following heat treatment was performed on each test piece after additive manufacturing.

### (Ni-based alloy)

Solution treatment: Air cooling was performed after holding at 980°C for 1 hour.

Aging treatment: After holding at 720°C for 8 hours, furnace cooling to 620°C was performed (over 2 hours), followed by holding at 620°C for 8 hours and then air cooling.

### (Fe-based alloy)

Solution treatment: Water cooling was performed after holding at 1040°C for 1 hour.

Aging treatment: Air cooling was performed after holding at 480°C for 2 hours.

### [Evaluation of Area Ratio of Oxide Nanoparticle Aggregation]

Thirty alloy particles to which oxide nanoparticles were attached were observed using a scanning electron microscope (SEM). Then, it was determined whether each particle was an alloy particle or an oxide nanoparticle by energy dispersive X-ray spectroscopy (EDS). A part with a particle diameter of more than 1 µm, calculated by conversion from the area, was defined as an oxide nanoparticle aggregation, and the area ratio of the oxide nanoparticle aggregation was determined from the following formula: Area ratio of oxide nanoparticle aggregation = (Total area of oxide nanoparticle aggregation observed in one alloy particle)/(Area of one alloy particle).

For the "area of one alloy particle," only the part visible in the SEM image was measured (i.e., the part that overlapped and could not be seen was not measured).

For each of the 30 alloy particles to which oxide nanoparticles were attached, the area ratio of an oxide nanoparticle aggregation was determined from the above formula, and the average value thereof was defined as the area ratio of the oxide nanoparticle aggregation in the alloy powder material for additive manufacturing.

### [Hausner Ratio]

The Hausner ratio of an alloy powder material for additive manufacturing is an index defined by tap density/apparent density. The lower the Hausner ratio is, the better the fluidity of the powder is.

The tap density (g/cm³) was evaluated based on the filling density measured by filling a cylinder having a volume of 100 cm³ with about 50 g of the powder and tapping 200 times at a drop height of 10 mm.

The apparent density (g/cm³) was measured in accordance with the standards of JIS Z 2504:2012.

### [High-Temperature Tensile Strength]

A type 6 test piece (ϕ6 × GL 30 mm) listed in Table A-3 of the Japanese Industrial Standard JIS G0567 (2020) was produced by an additive manufacturing method (SLM or binder jet method) using each alloy powder material for additive manufacturing. The maximum tensile stress σ applied during the tensile test was calculated as tensile strength (σ = measured load F/cross-sectional area S) using these test pieces. The tensile test was performed in an environment of 649°C.

### [Rapture Test]

A creep rupture test piece with a parallel portion having a diameter of 6 mm was prepared. The creep rupture test piece was prepared under the following conditions. A rupture test (break test) was performed under the following conditions.
- Ni-based alloy: 649°C, 690 MPa
- Fe-based alloy: 482°C, 665 MPa

As shown in Tables 2 and 3, different amounts of oxide nanoparticles were added to Ni-based alloy powder A, Ni-based alloy powder B, or Fe-based alloy powder C in Table 1-1, followed by mixing. Thus, alloy powder materials for additive manufacturing of Example Nos. 1 to 11 and alloy powder materials for additive manufacturing of Comparative Example Nos. 12 to 14 were prepared. Additive manufacturing was performed using them. The characteristics of each were evaluated using the method described above. The results are shown in Tables 2 and 3. All oxide nanoparticles used in the Examples and Comparative Examples are Y₂O₃ nanoparticles. The additive amount of oxide nanoparticles (mass%) is based on the mass of the alloy powder serving as the base powder.

### [Table 2]

**Table 2 : Examples**

| No. | Alloy powder type | D₅₀ of alloy powder (µm) | Additive amount of oxide nanoparticles (mass%) | Area ratio of oxide nanoparticle aggregation (%) | Hausner ratio | High-temperature tensile strength (MPa) | Rupture break time (h) |
|---|---|---|---|---|---|---|---|
| 1 | Ni-based alloy powder A | 31.2 | 0.31 | 1.1 | 1.12 | 1193 | 151.3 |
| 2 | Ni-based alloy powder B | 8.3 | 0.15 | 0.9 | 1.09 | 1170 | 142.3 |
| 3 | Ni-based alloy powder A | 31.2 | 0.68 | 2.7 | 1.14 | 1215 | 184.3 |
| 4 | Ni-based alloy powder A | 31.2 | 1.11 | 3.2 | 1.16 | 1234 | 210.3 |
| 5 | Ni-based alloy powder A | 31.2 | 1.43 | 4.8 | 1.19 | 1235 | 209.6 |
| 6 | Fe-based alloy powder C | 30.9 | 0.35 | 1.2 | 1.08 | 524 | 83.0 |
| 7 | Fe-based alloy powder C | 30.9 | 0.74 | 2.4 | 1.13 | 551 | 89.3 |
| 8 | Ni-based alloy powder A | 31.2 | 0.02 | 0.2 | 1.09 | 1003 | 86.1 |
| 9 | Ni-based alloy powder A | 31.2 | 0.32 | 6.3 | 1.12 | 1020 | 99.6 |
| 10 | Ni-based alloy powder A | 31.2 | 1.73 | 12.1 | 1.21 | 1034 | 97.4 |
| 11 | Fe-based alloy powder C | 30.9 | 0.02 | 0.3 | 1.12 | 419 | 56.4 |

### [Table 3]

**Table 3 : Comparative Examples**

| No. | Alloy powder type | D₅₀ of alloy powder (µm) | Additive amount of oxide nanoparticles (mass%) | Area ratio of oxide nanoparticle aggregation (%) | Hausner ratio | High-temperature tensile strength (MPa) | Rupture break time (h) |
|---|---|---|---|---|---|---|---|
| 12 | Ni-based alloy powder A | 31.2 | Not added | 0.0 | 1.19 | 989 | 84.4 |
| 13 | Ni-based alloy powder B | 8.3 | Not added | 0.0 | Not measurable | 974 | 82.2 |
| 14 | Fe-based alloy powder C | 30.9 | Not added | 0.0 | Not measurable | 417 | 54.9 |

As shown in FIG. 1, it was confirmed that when 0.01 mass% of Y₂O₃ nanoparticles were added, no nanoparticle aggregation formed (FIG. 1 (a)), while when 0.3 mass% of Y₂O₃ nanoparticles were added, a nanoparticle aggregation formed (FIG. 1 (b)).

Each of the additively manufactured articles prepared using the alloy powder materials for additive manufacturing of the Examples whose base powder was Ni-based alloy powder A had higher tensile strength, was more difficult to break, and exhibited excellent high-temperature strength than the additively manufactured article prepared using the alloy powder material for additive manufacturing of the Comparative Example whose base powder was Ni-based alloy powder A. The additively manufactured article prepared using the alloy powder material for additive manufacturing of the Example whose base powder was Ni-based alloy powder B had higher tensile strength, was more difficult to break, and exhibited excellent high-temperature strength than the additively manufactured article prepared using the alloy powder material for additive manufacturing of the Comparative Example whose base powder was Ni-based alloy powder B. Each of the additively manufactured articles prepared using the alloy powder materials for additive manufacturing of the Examples whose base powder was Fe-based alloy powder C had higher tensile strength, was more difficult to break, and exhibited excellent high-temperature strength than the additively manufactured article prepared using the alloy powder material for additive manufacturing of the Comparative Example whose base powder was Fe-based alloy powder C.

It was also confirmed that the alloy powder materials for additive manufacturing of the Examples had low Hausner ratios, indicating excellent fluidity, showing that they are suitable as an alloy powder material for additive manufacturing.

Fluidity was poor, and the flow did not occur in Comparative Example Nos. 13 and 14. Therefore, the apparent density could not be measured, making it impossible to evaluate the Hausner ratio. Adding oxide nanoparticles, as in the present invention, allowed those that were conventionally not suitable as an alloy powder material for additive manufacturing to be securely used for additive manufacturing and to have excellent high-temperature strength.

### INDUSTRIAL APPLICABILITY

The alloy powder material for additive manufacturing according to the present invention is suitable as a metal powder for additive manufacturing in a metal deposition method, a powder bed method, an electron beam method, or a binder jet method. Further, the additively manufactured article is suitable for heat-resistant parts.

## Claims

1. An alloy powder material for additive manufacturing, comprising:
an alloy powder; and
oxide nanoparticles that have not been subjected to surface treatment with an organic substance.
wherein the oxide nanoparticles are attached to surfaces of alloy particles constituting the alloy powder.

2. The alloy powder material for additive manufacturing according to claim 1, wherein the alloy powder is an Ni-based alloy powder.

3. The alloy powder material for additive manufacturing according to claim 1, wherein the alloy powder is an Fe-based alloy powder.

4. The alloy powder material for additive manufacturing according to any one of claims 1 to 3, wherein an area ratio of an oxide nanoparticle aggregation formed by the oxide nanoparticles is 0.1% or more and 10% or less.

5. The alloy powder material for additive manufacturing according to any one of claims 1 to 4, wherein an additive amount of the oxide nanoparticles is 0.1 mass% or more and 1.5 mass% or less, based on a mass of the alloy powder.

6. The alloy powder material for additive manufacturing according to any one of claims 1 to 5, wherein a primary particle size of the oxide nanoparticles is 1 nm or more and 100 nm or less.

7. The alloy powder material for additive manufacturing according to any one of claims 1 to 6, wherein an oxide constituting the oxide nanoparticles is Y₂O₃, ThO₂, Al₂O₃, TiO₂, or SiO₂.

8. An additively manufactured metal article obtained by additive manufacturing using the alloy powder material for additive manufacturing according to any one of claims 1 to 7.
